# EUROPÄISCHE PATENTANMELDUNG

(11) **EP 2 072 179 A1**
(43) Veröffentlichungstag der Anmeldung: **24.06.2009**
(21) Anmeldenummer: 08020868.9
(22) Anmeldetag: 02.12.2008
(51) Int. Cl.: B23P 19/06, F16B 37/06

(54) **Verfahren zum Einbringen von Verbindungselementen in Metallbleche sowie Verbindung zwischen einem Metallblech und einem Verbindungslement**

(30) Priorität: 21.12.2007 DE 102007062992; 28.03.2008 DE 102008016273
(71) Anmelder: Schmidt, Heiko, 93138 Lappersdorf (DE)
(72) Erfinder: Schmidt, Heiko, 93138 Lappersdorf (DE)
(74) Vertreter: Graf, Helmut

(57) **Zusammenfassung**

Die Erfindung bezieht sich auf ein Verfahren zum Einbringen von Verbindungselementen (3) in Metallbleche (1) oder Blechteile aus Metall (1) durch Einführen eines bolzen- oder hülsenartigen Fügeabschnitts (3.1) des Verbindungselementes (3) in eine im Metallblech (1) vorgesehene Fügeöffnung (2) derart, dass das Verbindungselement (3) mit einem erweiterten Kopfabschnitt (3.2) gegen eine Oberflächenseite (1.2) des Metallblechs (1) anliegt und mit einer Teillänge des Fügeabschnitts (3.1) über die andere Oberflächenseite (1.1) des Metallblechs (1) vorsteht, sowie durch anschließendes Verpressen des Verbindungselementes (3) im Metallblech (1) durch plastische Materialverformung unter Anwendung einer Verpresskraft.

## Beschreibung

Die Erfindung bezieht sich auf ein Verfahren gemäß Oberbegriff Patentanspruch 1 und dabei speziell auf ein Verfahren zum Einbringen von Einpress- und/oder Niet-Verbindungselementen in Metallbleche oder in aus Metallblech hergestellte Bauteile (auch Blechteile) sowie auf eine Verbindung zwischen einem Metallblech und einem Verbindungselement gemäß Oberbegriff Patentanspruch 10.

Verfahren zum Einbringen von Verbindungselementen in Metallbleche oder in aus Metallblech hergestellte Bauteile (auch Blechteile) durch Fügen und anschließendes Verpressen sind bekannt. Die Verbindungselemente sind dabei in der Regel Niet- und/oder Pressmuttern oder Bolzen (mit oder ohne Gewinde) und können zutreffend auch als Einpress- und/oder Niet-Verbindungselemente bezeichnet werden.

Nach dem Fügen, d.h. nach dem Einsetzen des Fügeabschnitts des jeweiligen Verbindungselementes in eine im Blech oder Blechteil vorbereitete Fügeöffnung (Vorlochung) erfolgt das Verbinden bzw. Verankern des Verbindungselementes durch Verpressen unter plastischer Verformung des Materials desjenigen Blechs im Bereich der Fügeöffnung, in dem das Verbindungselement verankert werden soll. Für die durch Fügen und Verpressen erzeugte Verbindung zwischen dem Blech und dem Verbindungselement wird u.a. gefordert, dass diese Verbindung eine hohe Festigkeit gegen Ausdrücken des Verbindungselementes aus dem Blech durch axial wirkende Kräfte sowie auch eine hohe Festigkeit gegen Verdrehen, d.h. eine ausreichend hohe Drehmomentaufnahme aufweist. Dies wird u.a. dadurch erreicht, dass das Material des Blechs beim Verpressen in einen am Verbindungselement vorhandenen und/oder während des Verpressens gebildeten Hinterschnitt fließt. Speziell zur Erzielung der geforderten hohen Drehmomentaufnahme werden Rippen oder Erhöhungen, die am Verbindungselement vorhanden sind, in das Blech eingeformt und/oder das Blech wird an unrunde Konturen des Verbindungselementes angeformt. Hierfür ist es unerlässlich, die Härten des Metallblechs und des jeweiligen aus Stahl bestehenden Verbindungselementes so aufeinander abzustimmen, dass das Metallblech eine im Vergleich zum Verbindungselement geringere Härte aufweist.

Das Fügen und Verpressen der Verbindungselemente erfolgt vielfach unter Verwendung eines sogenannten Stanzkopfes in einem Werkzeug, beispielsweise Folgewerkzeug, in welchem auch das jeweilige Blechteil oder Bauteil z.B. durch Stanzen und/oder Biegen aus dem Metallblech erzeugt wird.

In vielen Bereichen der Technik, insbesondere auch im Automobilbereich werden aber zunehmend Metallbleche mit großer Härte, beispielsweise Edelstahlbleche eingesetzt, d.h. Metallbleche deren Härte wenigstens gleich, in der Regel sogar größer ist als die Härte der zur Verfügung stehenden Einpress- und/oder Niet-Verbindungselemente und bei denen somit die bekannte Füge- und Verpresstechnik nicht mehr anwendbar ist.

Aufgabe der Erfindung ist es, ein Verfahren aufzuzeigen, mit dem den Qualitätsansprüchen insbesondere hinsichtlich Ausdrückfestigkeit und Drehmomentaufnahme entsprechende Verbindungen durch Fügen und Verpressen auch bei Metallblechen möglich ist, deren Härte größer, zumindest aber gleich der Härte des jeweiligen Verbindungselementes ist.

Zur Lösung dieser Aufgabe ist ein Verfahren zum Einbringen und Verankern von Verbindungselementen in Metallblechen oder in aus Metallblech hergestellten Bauteilen oder Blechteilen entsprechend dem Patentanspruch 1 ausgebildet. Eine Verbindung ist Gegenstand des Patentanspruchs 10.

In Weiterbildung der Erfindung ist das Verfahren beispielsweise so ausgestaltet,
dass die wenigstens eine randseitige Profilierung von wenigstens einer randseitigen Ausnehmung oder Randvertiefung gebildet ist,
und/oder
dass die wenigstens eine randseitige Profilierung von wenigstens einem randseitigen Vorsprung gebildet ist,
und/oder
dass die randseitige Profilierung von einem polygonalen Öffnungsrand der Fügeöffnung gebildet ist,
und/oder
dass beim Verpressen nur oder im Wesentlichen nur der Fügeabschnitt (3.1) verformt wird,
und/oder
dass beim Verpressen der Fügeabschnitt derart verformt wird, dass er einen den Rand der Fügeöffnung übergreifenden und/oder in einer Erweiterung der Fügeöffnung aufgenommenen und zugleich in die wenigstens eine randseitige Profilierung hineinreichenden Verankerungsabschnitt bildet,
und/oder
dass der Verankerungsabschnitt zumindest in Teilbereichen über den ursprünglichen Durchmesser des Fügeabschnitts radial vorsteht,
und/oder
dass das Verpressen in der Weise erfolgt, dass das Metallblech zumindest im Bereich der Fügeöffnung zwischen dem Kopfabschnitt und dem durch plastische Verformung des Materials des Fügeabschnitts gebildeten Verankerungsabschnitt eingespannt ist,
und/oder
dass das Verpressen derart erfolgt, dass der durch plastische Verformung des Fügeabschnitts gebildete Verankerungsabschnitt auch im Bereich der randseitigen Profilierung angepresst gegen das Metallblech anliegt.,
und/oder
dass die wenigstens eine Randvertiefung eine in das Blech am Rand der Fügeöffnung durch Prägen erzeugte, zur anderen Oberflächenseite sowie zur Fügeöffnung hin offene Vertiefung ist,
und/oder
dass die wenigstens eine Randvertiefung mit einer Bodenfläche in Form einer Schrägfläche ausgebildet wird, die mit der Ebene der anderen Oberflächenseite einen sich in die Fügeöffnung hin öffnenden spitzen Winkel, d.h. einen Winkel kleiner als 45° einschließt,
und/oder
dass die wenigstens eine randseitige Profilierung so erzeugt wird, dass sie sich nur über einen Bruchteil des Randbereiches der Fügeöffnung erstreckt,
und/oder
dass an der Fügeöffnung wenigstens zwei voneinander beabstandete randseitige Profilierungen vorgesehen werden, vorzugsweise im eine Achse der Fügeöffnung gleichmäßig verteilt,
und/oder
dass das Blech zur Erzeugung der Fügeöffnung vorgelocht und anschließend die wenigstens eine randseitige Profilierung durch Materialverformung, beispielsweise durch Prägen erzeugt wird,
und/oder
dass die Vorlochung mit einem Durchmesser erfolgt, der gleich oder im Wesentlichen gleich dem Durchmesser der Fügeöffnung ist,
und/oder
dass die Vorlochung und das Einbringen der randseitigen Profilierung in zwei Verfahrensschritten mit zwei Werkzeugen erfolgen,
und/oder
dass das Vorlochen und Einbringen der randseitigen Profilierung mit einem Werkzeug in einem einzigen Verfahrensschritt erfolgt,
und/oder
dass die Fügeöffnung kreisförmig oder im Wesentlichen kreisförmig ausgebildet wird,
und/oder
dass die Fügeöffnung derart hergestellt wird, dass sie zumindest an der anderen Oberflächenseite des Metallblechs einen polygonartigen Randverlauf aufweist,
und/oder
dass das Metallblech oder Blechteil ein aus einem Blech-Material, beispielsweise durch Stanzen und/oder Biegen hergestelltes Bauteil oder ein Bestandteil eines solchen Bauteils ist,
und/oder
dass das Verformen des Fügeabschnitts durch Scheren und/oder Nieten erfolgt,
wobei die vorgenannten Merkmale einzeln oder in beliebiger Kombination vorgesehen sein können.

In Weiterbildung der Erfindung ist die Verbindung beispielsweise so
dass die wenigstens eine randseitige Profilierung von wenigstens einer randseitigen Ausnehmung oder Randvertiefung gebildet ist,
und/oder
dass die wenigstens eine randseitige Profilierung von wenigstens einem randseitigen Vorsprung gebildet ist,
und/oder
dass nur der Fügeabschnitt oder im Wesentlichen nur der Fügeabschnitt plastisch verformt ist,
und/oder
dass der Fügeabschnitt derart verformt ist, dass er einen den Rand der Fügeöffnung übergreifenden und/oder in einer Erweiterung der Fügeöffnung aufgenommenen und zugleich in die wenigstens eine randseitige Profilierung hineinreichenden Verankerungsabschnitt bildet,
und/oder
dass der Verankerungsabschnitt zumindest in Teilbereichen über den ursprünglichen Durchmesser des Fügeabschnitts radial vorsteht,
und/oder
dass das Metallblech zumindest im Bereich der Fügeöffnung zwischen dem Kopfabschnitt und dem durch plastische Verformung des Materials des Fügeabschnitts gebildeten Verankerungsabschnitt eingespannt ist,
und/oder
dass der durch plastische Verformung des Fügeabschnitts gebildete Verankerungsabschnitt auch im Bereich der randseitigen Profilierung angepresst gegen das Metallblech anliegt,
und/oder
dass die wenigstens eine Randvertiefung eine in das Blech am Rand der Fügeöffnung durch Prägen erzeugte, zur anderen Oberflächenseite sowie zur Fügeöffnung hin offene Vertiefung ist,
und/oder
dass die wenigstens eine Randvertiefung mit einer Bodenfläche in Form einer Schrägfläche ausgebildet wird, die mit der Ebene der anderen Oberflächenseite einen sich in die Fügeöffnung hin öffnenden spitzen Winkel, d.h. einen Winkel kleiner als 45° einschließt,
und/oder
dass sich die wenigstens eine randseitige Profilierung nur über einen Bruchteil des Randbereiches der Fügeöffnung erstreckt,
und/oder
dass an der Fügeöffnung wenigstens zwei voneinander beabstandete randseitige Profilierungen vorgesehen werden, vorzugsweise im eine Achse der Fügeöffnung gleichmäßig verteilt,
und/oder
dass die Fügeöffnung kreisförmig oder im Wesentlichen kreisförmig ausgebildet wird,
und/oder
dass die randseitige Profilierung von einem polygonalen Öffnungsrand der Fügeöffnung gebildet ist,
und/oder
dass die Fügeöffnung zumindest an der anderen Oberflächenseite des Metallblechs einen polygonartigen Randverlauf aufweist,
und/oder
dass das Metallblech oder Blechteil ein aus einem Blech-Material, beispielsweise durch Stanzen und/oder Biegen hergestelltes Bauteil oder ein Bestandteil eines solchen Bauteils ist,
und/oder
dass der Fügeabschnitt durch Scheren und/oder Nieten verformt ist
wobei die vorgenannten Merkmale einzeln oder in beliebiger Kombination vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Verbindungselemente im Sinne der Erfindung sind grundsätzlich Einpress- und/oder Niet-Verbindungselemente, die durch Fügen und Verpressen an einer Fügeöffnung eines Metallblechs oder eines Blechteils aus Metallblech verankerbar sind. Verbindungselemente im Sinne der Erfindung sind daher insbesondere Niet- und/oder Pressmuttern sowie Niet- und/oder Pressbolzen mit oder ohne Gewinde.

Unter "Fügeabschnitt" ist im Sinne der Erfindung ein Abschnitt des jeweiligen Einpress- und/oder Niet-Verbindungselementes zu verstehen, mit dem dieses Element in eine Fügeöffnung einsetzbar und am Metallblech oder Blechteil durch plastische Materialverformung drehfest verankerbar ist.

Die Erfindung wird im Folgenden anhand der Figuren an Ausführungsbeispielen näher erläutert. Es zeigen:
- Fig. 1: in vereinfachter Darstellung eine Draufsicht auf die Unterseite eines aus einem harten Blech, beispielsweise aus einem Edelstahl-Blech bestehendes Blechteils oder Blechteils im Bereich einer Fügeöffnung;
- Fig. 2: einen Schnitt entsprechend der Linie I - I;
- Fig. 3: in vergrößerter Teildarstellung das Blechteil, zusammen mit einem in der Fügeöffnung verankerten Verbindungselement;
- Fig. 4: in Teildarstellung eine Ansicht des im Blechteil verankerten Fügeelementes in einer Blickrichtung entsprechend dem Pfeil A der Figur 3;
- Fig. 5: in Einzeldarstellung und im Schnitt eine Matrize zum Verankern des Verbindungselementes in der Fügeöffnung;
- Fig. 6: und 7 Darstellungen wie Figuren 1 und 2 bei einer weiteren Ausführungsform der Erfindung;
- Fig.: 8 in Teildarstellung und im Schnitt ein Stempel zum Formen der Fügeöffnung.

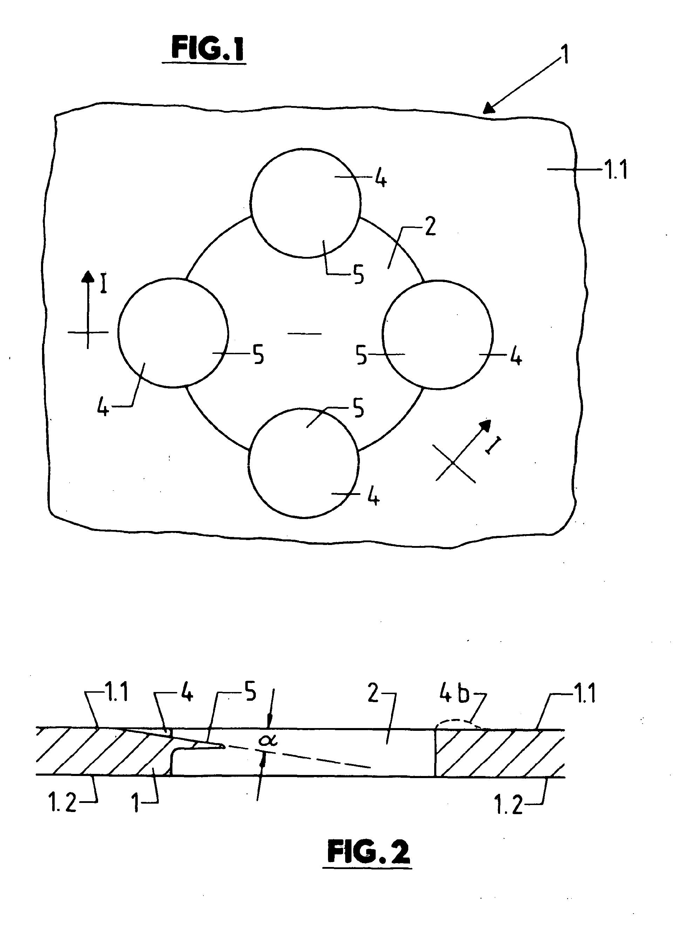

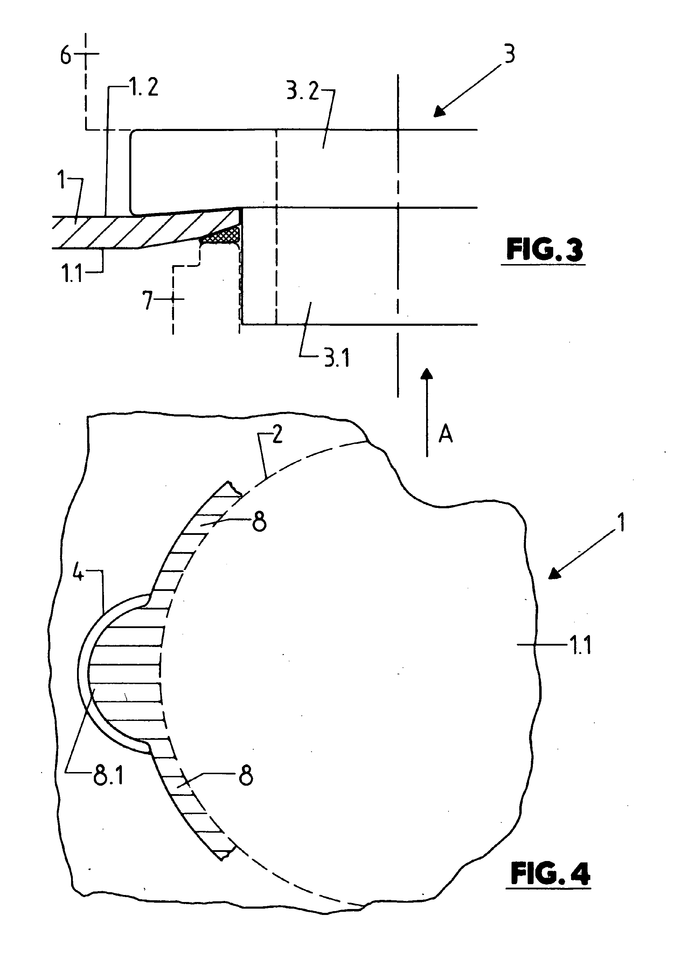

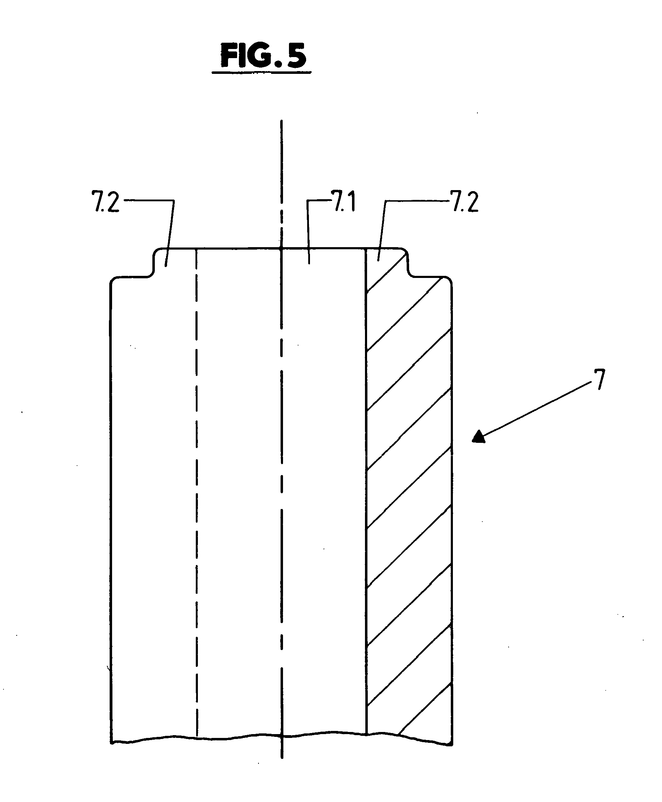

In den Figuren 1 - 5 ist 1 ein aus Blech großer Härte, beispielsweise aus einem Edelstahl-Blech bestehendes Blechteil mit einer Fügeöffnung 2, in welcher durch Fügen und Verpressen ein bei der dargestellten Ausführungsform als Mutter ausgeführtes Verbindungselement 3 verankert werden soll, und zwar mit hohen Auspresskraft und Drehmomentaufnahme. Die Besonderheit besteht dabei darin, dass die Härte des das Blechteil 1 bildenden Metallblechs größer oder zumindest gleich der Härte des Verbindungselementes 3 ist.

Um die Verankerung des Verbindungselementes 3 im Blechteil 1 mit der geforderten hohen Auspresskraft und Drehmomentaufnahme zu erreichen, ist die Fügeöffnung an der Blechunterseite 1.1 des Blechteils 1 in der in den Figuren 1 und 2 dargestellten Weise ausgebildet, und zwar in der Form, dass sich die Fügeöffnung 2 am Rand zur Oberseite 1.1 leicht konisch erweitert und außerdem am Rand der Fügeöffnung 2 mehrere Randvertiefungen 4 gebildet sind, die zur Blechunterseite 1.1 sowie auch zur Fügeöffnung 2 hin offen sind und deren Bodenflächen mit der Ebene der Blechunterseite 1.1 einen spritzen Winkel, d.h. einen Winkel α kleiner als 45° einschließen, der sich zur Mitte der Fügeöffnung 2 hin öffnet

Die Fügeöffnung 2 mit den Randvertiefungen 4 wird beispielsweise in einem Stanz- oder Prägeverfahren erzeugt, und zwar in der Weise, dass zunächst die bei der dargestellten Ausführungsform im Querschnitt kreisförmige Fügeöffnung 2 durch Stanzen erzeugt und anschließend mit einem geeigneten stempelartigen Werkzeug der Randbereich der Fügeöffnung 2 an der Blechunterseite 1.1 derart plastisch verformt wird, dass sich die Randvertiefungen 4 bilden und das hierbei verdrängte Material des Blechs 1 in die Fügeöffnung 2 fließt, und zwar unter Bildung von in die Fügeöffnung hineinreichenden zungenartigen Vorsprüngen 5, von denen jeder in eine Randvertiefung 4 übergeht.

Das Verbindungselement 3 ist in an sich bekannter Weise im Wesentlichen mit einer an der Außenfläche kreiszylinderförmigen hülsenartigen Fügeabschnitt 3.1 und an einem Ende dieses Abschnitts mit einem Kopfstück 3.2 ausgebildet, welches über die Umfangsfläche des Fügeabschnitts 3.1 wegsteht. Das Verbindungselement 3 ist weiterhin mit einer Gewindebohrung 3.3 versehen, die achsgleich mit der Achse der kreiszylinderförmigen Umfangsfläche des Fügeabschnitts 3.1 ausgeführt ist und durch den Abschnitt 3.1 und das Kopfstück 3.2 hindurchreicht.

Der Außendurchmesser des Fügeabschnitts 3.2 ist gleich oder geringfügig kleiner als der Durchmesser der Fügeöffnung 2 außerhalb der Vorsprünge 5. Zum Befestigen des Verbindungselementes 3 an dem Blechteil 1 wird das Verbindungselement 3 unter Verformung der Vorsprünge 5 in die Fügeöffnung 2 eingesetzt, und zwar derart, dass das Kopfstück 3.2 mit seiner dem Abschnitt 3.1 zugewandten Seite gegen die Blechoberseite 1.2 des Blechs anliegt und der Abschnitt 3.1 mit einer Teillänge über die Blechunterseite 1.1 des Blechs 1 vorsteht.

Anschließend erfolgt in einer Presse oder einem Presswerkzeug bei gegen ein Auflager 6 abgestütztem Kopfstück 3.1 mit Hilfe einer hülsenartigen Matrize 7 ein plastisches Verformen des Verbindungselementes 3 im Bereich der über die Blechunterseite 1.1 vorstehenden Teillänge des Fügeabschnitts 3.1, und zwar an der Außenfläche dieser Teillänge durch Scheren in der Weise, dass sich aus dem oberflächennahen Bereich der über die Blechunterseite 1.1 vorstehenden Teillänge des Fügeabschnitts 3.1 ein Wulst 8 bildet, der außerhalb der Randvertiefungen 4 geringfügig über die Umfangsfläche des Fügeabschnitts 3.1 und damit auch über den Rand der Fügeöffnung 2 übersteht und/oder in der konischen Erweiterung der Fügeöffnung 2 aufgenommen ist. Im Bereich der Randvertiefungen 4 bildet der Wulst 8 Vorsprünge 8.1, die sehr weit, d.h. mit einem größeren radialen Abstand von der Achse der Fügeöffnung 2 bzw. des Verbindungselementes 3 in die jeweilige Randvertiefung 4 hineinreichen. Bei feststehender Matrize 7 ist das Auflager beispielsweise von einem Pressstempel oder - plunger gebildet.

Beim Verankern des Verbindungselementes 3 in der Fügeöffnung 2 wird mit der Matrize 7, die beim Verpressen mit ihrer Matrizenöffnung 7.1 die über die Blechunterseite 1.1 vorstehende Teillänge des Fügeabschnitts 3.1 umschließt nahezu ausschließlich Kraft auf das Verbindungselement 3 ausgeübt, so dass für das Verankern bzw. Verpressen des Verbindungselementes 3 im Blechteil 1 hauptsächlich dieses Verbindungselement durch Scheren am Fügeabschnitt 3.1 verformt wird und keine Verformung oder im Wesentlichen keine Verformung des Blechteils 2 zumindest kein fließen des Materials des Blechteils 1 erfolgt. Die Matrize 7 ist hierfür an ihrer beim Verankern und Verpressen auf das Verbindungselement 3 einwirkenden Seite mit einem das dortige offene Ende der Matrizenöffnung 7 ringförmig umschließenden Vorsprung 7.2 ausgeführt, so dass die gesamte Kraft beim Verankern bzw. Verpressen des Verbindungselementes 3 konzentriert als Scherkraft zur Ausbildung des Wulstes 8 und zum Verpressen dieses Wulstes 8 und der Vorsprünge 8.1 gegen die Blechunterseite 1.1 bzw. in die Randvertiefungen 4 wirksam ist.

Mit dem vorbeschriebenen Verfahren wird eine Verankerung des Verbindungselementes 3 mit hoher Auspresskraft bzw. hoher Auspressfestigkeit und mit hohem Drehmoment, d.h. mit hoher Festigkeit gegen Verdrehen erreicht, und zwar letzteres insbesondere auch durch die in die Randvertiefungen 4 verformten Vorsprünge 8.1. Nach dem Fertigstellen der Verankerung des Verbindungselementes im Blech 1 liegt der Wulst 8 in seinem gesamten Verlauf, insbesondere auch im Bereich der Randvertiefungen 4 mit einer hohen Anpress- oder Einspannkraft gegen den die Fügeöffnung 2 umgebenden Randbereich des Blechs 1 an.

Bei der dargestellten Ausführungsform ist das Verbindungselement 3 an seiner dem Fügeabschnitt 3.1 zugewandten Stirnfläche des Kopfstückes 3.2 mit einer den Fügeabschnitt 3.1 umgebenden Vertiefung 3.3 ausgebildet, und zwar in Form einer Kegelfläche in der Weise, dass die Tiefe dieser ringförmigen Vertiefung mit zunehmenden Abstand von dem äußeren Rand des Kopfstückes 3.2 hin zunimmt. Beim Verpressen der Verbindungselementes 3 im Blechteil 1 wird der die Fügeöffnung 2 umgebende Randbereich des Blechteils 1 in die Vertiefung 3.3 verformt, und zwar im Wesentlichen durch Biegen bzw. Prägen und ohne dass eine Verankerung des Verbindungselementes 3 im Blechteil 1 durch Fließen des Materials des Blechteiles 3 erfolgt. Durch die Vertiefung 3.3 bzw. durch die dieser Vertiefung entsprechende Verformung des Randbereichs der Fügeöffnung 2 wird Platz für die Aufnahme des Wulstes 8 geschaffen, so dass dieser nicht über die Blechunterseite 1.1 vorsteht.

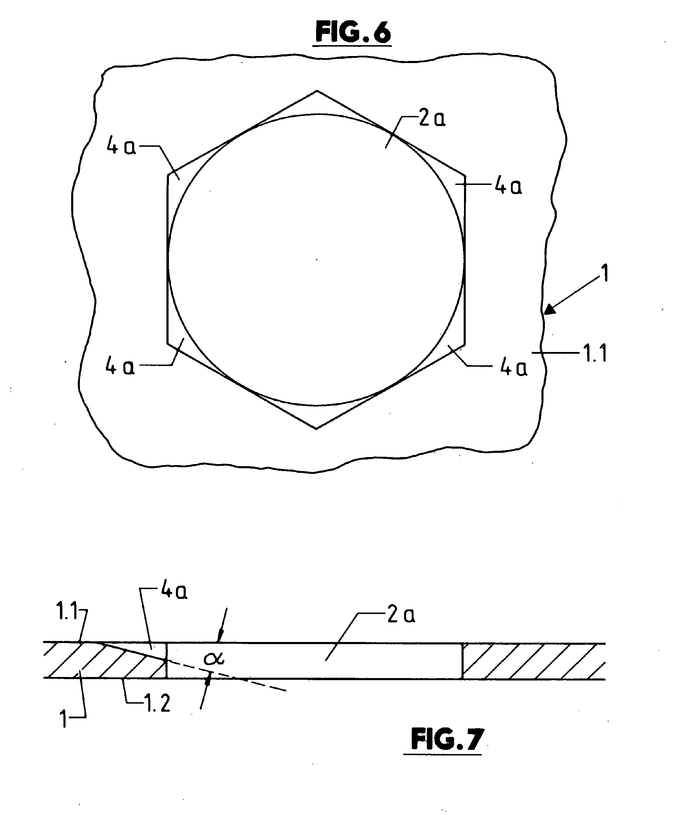

Die Figuren 6 und 7 zeigen ein Blechteil 1 mit einer Fügeöffnung 2a, deren Randbereich zumindest an der Blechunterseite 1.1 polygonartig geformt ist. Die Herstellung der Fügeöffnung erfolgt beispielsweise wiederum in zwei Schritten, und zwar in der Weise, dass zunächst durch Stanzen eine Vorlochung in Form einer kreisförmigen Öffnung erzeugt wird, und dass dann in einem anschließenden Prägeschritt mit einem in die Vorlochung eingeführten Prägestempel der Randbereich der Vorlochung an der Blechunterseite 1.1 in die polygonartige Form verformt wird. Hierdurch werden Randvertiefungen 4a erhalten, die zur Blechunterseite 1.1 sowie auch zur Fügeöffnung 2a hin offen sind und bevorzugt Schrägflächen bilden, die mit der Ebene der Blechunterseite 1.1 wiederum einen spritzen Winkel, d.h. einen Winkel α kleiner als 45° einschließen, der sich zur Mitte der Fügeöffnung hin öffnet.

Nach dem Einsetzen des Verbindungselementes 3 in die Fügeöffnung 2a erfolgt wiederum das Verankern und Verpressen des Verbindungselementes 5 am Blechteil 1 durch bleibende Verformung, d.h. durch Scheren des oberflächennahen Materials des Fügeabschnitts 3.1 zur Ausbildung eines den Wulst 8 entsprechenden Wulstes mit den in die Randvertiefungen 4a hineinreichenden Bereichen oder Vorsprüngen. Auch bei dieser Ausführung weist die Verankerung des Verbindungselementes 3 im Blechteil 1 eine hohe Ausreißfestigkeit und Festigkeit gegen Verdrehen auf.

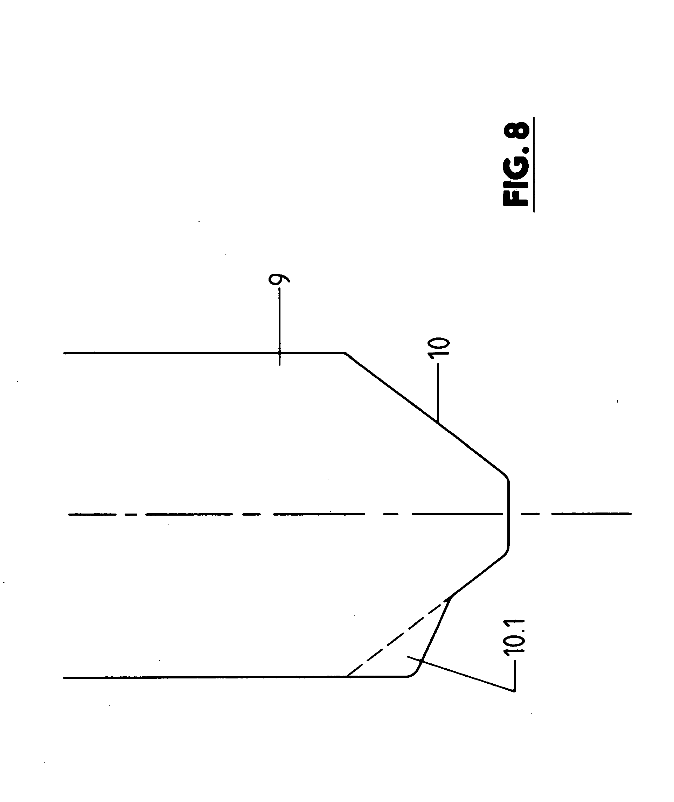

In der Figur 8 ist mit 9 ein Prägestempel bezeichnet, mit dem die Randvertiefungen 4 oder 4a nach dem Vorlochen an der jeweiligen Fügeöffnung 2 bzw. 2a erzeugt werden. Der Stempel 9 besitzt hierzu ein sich kegelförmig verjüngendes Stempelende 10 mit über die Kegelfläche dieses Endes radial wegstehenden Vorsprüngen 10.1, mit denen durch Prägen die Randvertiefungen erzeugt werden.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

So ist es insbesondere möglich, die Randvertiefungen auch anders als vorstehend beschrieben zu formen oder auszubilden, beispielsweise auch in Form von Kerben, die in das die Fügeöffnung umgebende Material eingebracht sind.

Weiterhin besteht die Möglichkeit, in die jeweilige Fügeöffnung durchgehend polygonartig vorzugsweise mit einer leichten Abschrägung oder konischen Erweiterung im Randbereich an der Blechunterseite 1.1 auszubilden, wobei auch bei dieser Ausführung dann mit Hilfe der Matrize 7 aus dem oberflächennahen Material des Fügeabschnitts 3.1 der über den Rand der Fügeöffnung vorstehende, dem Wulst 8 entsprechende Wulst mit in die Eckbereiche des polygonartigen Querschnittes der Fügeöffnung hinein verformten Materialienabschnitten oder Vorsprüngen ausgebildet und dadurch eine Verankerung mit hoher Ausreiß- bzw. Anpressfestigkeit und hoher Drehmomentaufnahme erreicht wird.

Vorstehend wurde davon ausgegangen, dass die Verankerung des Verbindungselementes 3 durch Verformen des oberflächennahen Materials des Fügeabschnitts 3.1 durch Scheren erfolgt. Selbstverständlich sind auch andere Verfahren für ein bleibendes Verformen des Fügeabschnitts 3.1 denkbar, beispielsweise durch Nieten.

Vorstehend wurde weiterhin davon ausgegangen, dass das Verbindungselement 3 eine Mutter ist. Selbstverständlich kann das Verbindungselement auch ein anderes Verbindungselement, beispielsweise ein Bolzen sein.

Anstelle der Randvertiefungen 4 bzw. 4a kann auch eine andere Randprofilierung vorgesehen sein beispielsweise in Form von einem oder mehreren am Rand der Fügeöffnung 2 oder 2a im Blech 1 vorgesehenen Vorsprüngen 4b. Weiterhin ist es möglich, die randseitige Profilierung zusätzlich oder allein von einem polygonalen Öffnungsrand der Fügeöffnung gebildet ist, z.B. an einer oder aber an beiden Oberflächenseiten des Bauteils 1.

### Bezugszeichenliste

- 1: Bauteil oder Blech
- 1.1: Blechunterseite
- 1.2: Blechoberseite
- 2,2a: Fügeöffnung
- 3: Verbindungselement
- 3.1: hülsenartiger Fügeabschnitt des Verbindungselementes 3
- 3.2: Kopfstück des Verbindungselementes 3
- 4,4a: Randvertiefung
- 4b: Vorsprung
- 5: zungenartiger Vorsprung
- 6: Auflager
- 7: Matrize
- 7.1: Matrizenöffnung
- 7.2: ringartiger Vorsprung
- 8: Wulst
- 8.1: Vorsprung
- 9: Prägestempel
- 10: kegelförmiges Stempelende
- 10.1: Vorsprung an der Kegelfläche

## Patentansprüche

1. Verfahren zum Einbringen von Verbindungselementen in Metallbleche oder Blechteile aus Metall, beispielsweise in ein aus einem Blech-Material, z.B. durch Stanzen und/oder Biegen hergestelltes Bauteil oder in einen Bestandteil eines solchen Bauteils, durch Einführen eines bolzen- oder hülsenartigen Fügeabschnitts (3.1) des Verbindungselementes (3) in eine im Metallblech (1) vorgesehene Fügeöffnung (2, 2a) derart, dass das Verbindungselement mit einem erweiterten Kopfabschnitt (3.2) gegen eine Oberflächenseite (1.2) des Metallblechs (1) anliegt und mit einer Teillänge des Fügeabschnitts (3.1) über die andere Oberflächenseite (1.1) des Metallblechs (1) vorsteht, sowie durch anschließendes Fixieren des Verbindungselementes (3) im Metallblech durch plastische Materialverformung unter Anwendung einer Verpresskraft,
**dadurch gekennzeichnet,**
**dass** bei Verwendung eines Metallblechs (1) mit einer Härte die gleich oder größer ist als die Härte des Verbindungselementes (3) die Fügeöffnung (2, 2a) mit wenigstens einer randseitigen Profilierung (4, 4a, 4b) zumindest an der anderen Oberflächenseite (1.1) des Blechs (1) ausgebildet wird, und dass beim Verpressen der Fügeabschnitt (3.1) zur Ausbildung von in die wenigstens eine randseitige Profilierung (4, 4a, 4b) hineinreichenden Verankerungsbereichen (8.1) plastisch verformt wird.

2. Verfahren nach Anspruch 1, **dadurch gekennzeichnet, dass** die wenigstens eine randseitige Profilierung von wenigstens einer randseitigen Ausnehmung oder Randvertiefung (4, 4a) und/oder von wenigstens einem randseitigen Vorsprung (4b) und/oder von einem polygonalen Öffnungsrand der Fügeöffnung (2, 2a) gebildet ist.

3. Verfahren nach einem der vorhergehenden Ansprüche, **dadurch gekennzeichnet,**
**dass** beim Verpressen nur oder im Wesentlichen nur der Fügeabschnitt (3.1) verformt wird,
und/oder
**dass** das Verformen des Fügeabschnitts (3.1) durch Scheren und/oder Nieten erfolgt,
und/oder
**dass** beim Verpressen der Fügeabschnitt (3.1) derart verformt wird, dass er einen den Rand der Fügeöffnung (2, 2a) übergreifenden und/oder in einer Erweiterung der Fügeöffnung (2, 2a) aufgenommenen und zugleich in die wenigstens eine randseitige Profilierung (4, 4a, 4b) hineinreichenden Verankerungsabschnitt (8, 8.1) bildet.

4. Verfahren nach einem der vorhergehenden Ansprüche, **dadurch gekennzeichnet, dass** der Verankerungsabschnitt (8, 8.1) zumindest in Teilbereichen über den ursprünglichen Durchmesser des Fügeabschnitts (3.1) radial vorsteht.

5. Verfahren nach einem der vorhergehenden Ansprüche, **dadurch gekennzeichnet,**
**dass** das Verpressen in der Weise erfolgt, dass das Metallblech (1) zumindest im Bereich der Fügeöffnung (2, 2a) zwischen dem Kopfabschnitt (3.2) und dem durch plastische Verformung des Materials des Fügeabschnitts (3.1) gebildeten Verankerungsabschnitt (8, 8.1) eingespannt ist,
und/oder
**dass** das Verpressen derart erfolgt, dass der durch plastische Verformung des Fügeabschnitts (3.1) gebildete Verankerungsabschnitt (8, 8.1) auch im Bereich der randseitigen Profilierung (4, 4a, 4b) angepresst gegen das Metallblech (1) anliegt.

6. Verfahren nach einem der vorhergehenden Ansprüche, **dadurch gekennzeichnet,**
**dass** die wenigstens eine Randvertiefung (4) eine in das Blech (1) am Rand der Fügeöffnung (2) durch Prägen erzeugte, zur anderen Oberflächenseite (1.1) sowie zur Fügeöffnung (2) hin offene Vertiefung ist,
und/oder
**dass** die wenigstens eine Randvertiefung (4) mit einer Bodenfläche in Form einer Schrägfläche ausgebildet wird, die mit der Ebene der anderen Oberflächenseite (1.1) einen sich in die Fügeöffnung (2, 2a) hin öffnenden spitzen Winkel, d.h. einen Winkel kleiner als 45° einschließt.

7. Verfahren nach einem der vorhergehenden Ansprüche, **dadurch gekennzeichnet, dass** die wenigstens eine randseitige Profilierung (4, 4a, 4b) so erzeugt wird, dass sie sich nur über einen Bruchteil des Randbereiches der Fügeöffnung (2, 2a) erstreckt.

8. Verfahren nach einem der vorhergehenden Ansprüche, **dadurch gekennzeichnet,**
**dass** an der Fügeöffnung (2, 2a) wenigstens zwei voneinander beabstandete randseitige Profilierungen (4, 4a, 4b) vorgesehen werden, vorzugsweise im eine Achse der Fügeöffnung (2, 2a) gleichmäßig verteilt,
und/oder
**dass** das Blech (1) zur Erzeugung der Fügeöffnung (2, 2a) vorgelocht und anschließend die wenigstens eine randseitige Profilierung (4, 4a, 4b) durch Materialverformung, beispielsweise durch Prägen erzeugt wird, wobei die Vorlochung beispielsweise mit einem Durchmesser erfolgt, der gleich oder im Wesentlichen gleich dem Durchmesser der Fügeöffnung (2, 2a) ist, und/oder beispielsweise die Vorlochung und das Einbringen der randseitigen Profilierung (4, 4a, 4b) in zwei Verfahrensschritten mit zwei Werkzeugen erfolgen und/oder beispielsweise das Vorlochen und Einbringen der randseitigen Profilierung (4, 4a, 4b) mit einem Werkzeug in einem einzigen Verfahrensschritt erfolgt.

9. Verfahren nach einem der vorhergehenden Ansprüche, **dadurch gekennzeichnet, dass** die Fügeöffnung (2) kreisförmig oder im Wesentlichen kreisförmig ausgebildet und/oder derart hergestellt wird, dass sie zumindest an der anderen Oberflächenseite (1.1) des Metallblechs (1) einen polygonartigen Randverlauf aufweist.

10. Verbindung zwischen einem Metallblech oder Blechteil aus Metall, beispielsweise einem aus einem Blech-Material, z.B. durch Stanzen und/oder Biegen hergestellten Bauteil oder einem Bestandteil eines solchen Bauteils ist und einem Verbindungselement, erzeugt durch Einführen eines bolzen- oder hülsenartigen Fügeabschnitts (3.1) des Verbindungselementes (3) in eine im Metallblech (1) vorgesehene Fügeöffnung (2, 2a) derart, dass das Verbindungselement (3) mit einem erweiterten Kopfabschnitt (3.2) gegen eine Oberflächenseite (1.2) des Metallblechs (1) anliegt, sowie durch Verpressen und Fixieren im Metallblech unter plastischer Materialverformung
**dadurch gekennzeichnet,**
**dass** das Metallblechs (1) eine Härte aufweist, die gleich oder größer ist als die Härte des Verbindungselementes (3), die Fügeöffnung (2, 2a) mit wenigstens einer randseitigen Profilierung (4, 4a, 4b) zumindest an der anderen Oberflächenseite (1.1) des Blechs (1) ausgebildet ist, und dass der Fügeabschnitt (3.1) einer über die andere Oberflächenseite (1.1) des Metallblechs (1) vorstehenden Teillänge zur Ausbildung von in die wenigstens eine randseitige Profilierung (4, 4a, 4b) hineinreichenden Verankerungsbereichen (8.1) plastisch verformt ist.

11. Verbindung nach Anspruch 10, **dadurch gekennzeichnet,**
**dass** die wenigstens eine randseitige Profilierung von wenigstens einer randseitigen Ausnehmung oder Randvertiefung (4, 4a) gebildet ist,
und/oder
**dass** die wenigstens eine randseitige Profilierung von wenigstens einem randseitigen Vorsprung (4b) gebildet ist.

12. Verbindung nach Anspruch 10 oder 11, **dadurch gekennzeichnet,**
**dass** nur der Fügeabschnitt (3.1) oder im Wesentlichen nur der Fügeabschnitt (3.1) plastisch verformt ist,
und/oder
**dass** der Fügeabschnitt (3.1) durch Scheren und/oder Nieten verformt ist,
und/oder
**dass** der Fügeabschnitt (3.1) derart verformt ist, dass er einen den Rand der Fügeöffnung (2, 2a) übergreifenden und/oder in einer Erweiterung der Fügeöffnung (2, 2a) aufgenommenen und zugleich in die wenigstens eine randseitige Profilierung (4, 4a, 4b) hineinreichenden Verankerungsabschnitt (8,
8.1) bildet.

13. Verbindung nach einem der vorhergehenden Ansprüche, **dadurch gekennzeichnet,**
**dass** der Verankerungsabschnitt (8, 8.1) zumindest in Teilbereichen über den ursprünglichen Durchmesser des Fügeabschnitts (3.1) radial vorsteht,
und/oder
**dass** der durch plastische Verformung des Fügeabschnitts (3.1) gebildete Verankerungsabschnitt (8, 8.1) auch im Bereich der randseitigen Profilierung (4, 4a, 4b) angepresst gegen das Metallblech (1) anliegt.

14. Verbindung nach einem der vorhergehenden Ansprüche, **dadurch gekennzeichnet, dass** das Metallblech (1) zumindest im Bereich der Fügeöffnung (2, 2a) zwischen dem Kopfabschnitt (3.2) und dem durch plastische Verformung des Materials des Fügeabschnitts (3.1) gebildeten Verankerungsabschnitt (8, 8.1) eingespannt ist.

15. Verbindung nach einem der vorhergehenden Ansprüche, **dadurch gekennzeichnet,**
**dass** die wenigstens eine Randvertiefung (4) eine in das Blech (1) am Rand der Fügeöffnung (2) durch Prägen erzeugte, zur anderen Oberflächenseite (1.1) sowie zur Fügeöffnung (2) hin offene Vertiefung ist,
und/oder
**dass** die wenigstens eine Randvertiefung (4) mit einer Bodenfläche in Form einer Schrägfläche ausgebildet wird, die mit der Ebene der anderen Oberflächenseite (1.1) einen sich in die Fügeöffnung (2, 2a) hin öffnenden spitzen Winkel (α), d.h. einen Winkel kleiner als 45° einschließt,
und/oder
**dass** sich die wenigstens eine randseitige Profilierung (4, 4a, 4b) nur über einen Bruchteil des Randbereiches der Fügeöffnung (2, 2a) erstreckt,
und/oder
**dass** die randseitige Profilierung von einem polygonalen Öffnungsrand der Fügeöffnung (2, 2a) gebildet ist,
und/oder
**dass** die Fügeöffnung zumindest an der anderen Oberflächenseite (1.1) des Metallblechs (1) einen polygonartigen Randverlauf aufweist.

16. Verbindung nach einem der vorhergehenden Ansprüche, **dadurch gekennzeichnet,**
**dass** an der Fügeöffnung (2, 2a) wenigstens zwei voneinander beabstandete randseitige Profilierungen (4, 4a, 4b) vorgesehen werden, vorzugsweise im eine Achse der Fügeöffnung (2, 2a) gleichmäßig verteilt,
und/oder
**dass** die Fügeöffnung (2) kreisförmig oder im Wesentlichen kreisförmig ausgebildet wird.
